# FASCICULE DE BREVET EUROPEEN

(11) **EP 0 641 834 B1**
(45) Date de publication et mention de la délivrance du brevet: **29.01.2003**
(21) Numéro de dépôt: 94870130.5
(22) Date de dépôt: 27.07.1994
(51) Int. Cl.: C08L 95/00, C08L 53/02

(54) **Composition bitumineuses pour materiaux d'insonorisation**
Bituminöse Zusammensetzungen für schalldämpfende Materialien
Bituminous compositions for sound damping materials

(30) Priorité: 29.07.1993 BE 9300793
(43) Date de publication de la demande: 08.03.1995
(73) Titulaire: ATOFINA Research, 7181 Seneffe (Feluy) (BE)
(72) Inventeur: Drieskens, Bruno Maria Guido, B-1060 Sint-Gillis (BE); Hallet, Jean-Philippe, B-1150 Woluwé-St-Pierre (BE); Lecouvet, NIcolas Marie, B-1420 Braine-l'Alleud (BE)

(56) Documents cités:
- WO-A-86/06736
- US-A- 3 856 732
- DATABASE WPI Week 8622, Derwent Publications Ltd., London, GB; AN 86-140842 & JP-A-61 076 539 (NAGOYA YUKAGAKU KOG) 19 Avril 1986
- DATABASE WPI Week 9310, Derwent Publications Ltd., London, GB; AN 93-080551 & JP-A-5 025 359 (TOYODA GOSEI KK) 2 Février 1993
- DATABASE WPI Week 8926, Derwent Publications Ltd., London, GB; AN 89-188427 & JP-A-1 126 371 (NISSHIN KASEI KK) 18 Mai 1989

## Description

La présente invention se rapporte à des compositions de bitume oxydé modifié avec des polymères qui peuvent être utilisées pour la fabrication de matériaux d'insonorisation.
Plus particulièrement, la présente invention concerne des compositions bitumineuses ayant des propriétés améliorées notamment une faible volatilité et une forte résistance au fluage à haute température.
La présente invention se rapporte également à des matériaux d'insonorisation fabriqués à partir de la composition bitumineuse de l'invention.Plus particulièrement, la présente invention se rapporte à des matériaux destinés à l'industrie automobile pour insonoriser les voitures.

Il est bien connu d'utiliser des compositions bitumineuses dans le domaine de la construction car elles présentent de bonnes caractéristiques pour les applications en étanchéité.
Dans la revue "Cahiers Techniques du Bâtiment" (N°90, p.113-118, 1987) on décrit des systèmes d'étanchéité pour les terrasses-jardins qui peuvent contenir des bitumes oxydés armés de voile de verre ou de polyester. On y décrit également des compositions de bitumes élastomères, à savoir des bitumes de raffinage modifiés avec soit du polypropylène atactique, soit du styrène-butadiène-styrène (SBS).

Dans la revue "Revue Générale Etanchéité Isolation" (Vol.30, N°113, p.13-17, 1978) on décrit les bitumes élastomères SBS utilisés en étanchéité de toitures et d'ouvrages d'art. On y indique que les bitumes oxydés ne conviennent pas aux mélanges avec des SBS car leur teneur en asphaltènes est trop importante.

La demande de brevet WO93/07220 décrit des feuilles imperméables comprenant une couche bitumineuse comprenant de 26 à 62% en poids de bitume oxydé, de 21 à 65% en poids d'huile et de 9 à 25% en poids d'un copolymère statistique styrène-butadiène.

En matière d'insonorisation, dans l'industrie automobile, il est connu d'utiliser des compositions comprenant du chlorure de polyvinyl (PVC), un terpolymère de type éthylène-propylène-diène monomère (EPDM) et/ou un copolymère de type éthylène-propylène (EPM), des huiles et des plastifiants. Toutefois, certaines de ces compositions ne sont plus souhaitées à cause de leur contenu en PVC.

La présente invention concerne des compositions bitumineuses particulièrement adaptées à la fabrication de matériaux d'insonorisation utilisés plus particulièrement pour insonoriser les voitures. De plus, la présente invention se rapporte à des compositions bitumineuses et à des matériaux d'insonorisation à base de ces compositions dont la fabrication est très facile. Les compositions de la présente invention présentent une faible volatilité et une forte résistance au fluage à haute température, deux caractéristiques très importantes pour l'industrie automobile en particulier.

La composition bitumineuse de la présente invention est caractérisée en ce qu'elle comprend essentiellement un mélange consistant en :
- 40 à 70% en poids de bitume oxydé,
- 30 à 60% en poids de copolymères blocs styrène-butadiène-styrène à structure radiale dont la teneur en styrène est comprise entre 20 et 35 % en poids,
- 0 à 10% en poids d'huile de mise en oeuvre,
le total représentant 100% en poids du mélange.

Le solde de la composition bitumineuse, consiste essentiellement en charges minérales telles que le carbonate de calcium, le sulphate de barium, le talc, le sable ou autre. La charge minérale est préférentiellement constituée de carbonate de calcium et/ou de sulphate de barium.

Les charges sont généralement utilisées à raison de 50 à 85% basé sur le poids de la composition totale.

On a maintenant trouvé d'une manière inattendue qu'une telle composition bitumineuse présente des propriétés améliorées, en particulier une faible volatilité et une forte résistance au fluage à haute température.

La Demanderesse a également trouvé qu'il était possible d'obtenir un mélange homogène à partir d'un bitume oxydé et d'un copolymère bloc styrène-butadiène-styrène à structure radiale.

Les bitumes oxydés tels qu'utilisés dans la présente invention répondent à la définition suivante : "bitume dont les propriétés rhéologiques ont été substantiellement modifiées par réaction avec de l'air à température élevée". De préférence, les bitumes oxydés utilisés dans la présente invention ont un point de ramollissement (température de bille et anneau) compris entre 80 et 120°C. Les bitumes oxydés présentant une pénétration à 25°C de 0 à 5 mm sont utilisés de manière préférentielle.
On peut également utiliser en place du bitume oxydé un asphalte naturel qui est un bitume dur que l'on peut trouver dans la nature et qui contient de la matière minérale; cet asphalte est virtuellement solide à 25°C et est un fluide visqueux à 175°C. Dans ce cas, la teneur en charges minérales de la composition tiendra compte des matières minérales présentes dans l'asphalte.

Un avantage particulier de la présente invention est que le bitume oxydé est solide à température ambiante. Il est généralement disponible en bloc ou dans des sacs et peut être stocké et manipulé très facilement ce qui n'est pas le cas du bitume de raffinage.

De préférence, les copolymères blocs radiaux styrène-butadiène ont un poids moléculaire total compris entre 70.000 et 300.000.

A titre d'exemples de copolymères radiaux appropriés on peut notamment citer les copolymères styrènes-butadiènes couplés de formule générale S-B-(c)-B-S où (c) représente l'agent de couplage et les copolymères styrènes-butadiènes-styrènes (SBS) sans agent de couplage.

Le copolymère di-bloc peut être à charnière statistique, c'est-à-dire qu'il contient un bloc styrénique et un bloc styrène-butadiène à répartition statistique.

Les copolymères blocs styrènes-diènes conjugués sont bien connus dans l'état de la technique. Ils sont généralement obtenus par polymérisation anionique dans un solvant, avec un catalyseur alkylmétallique comme les alkyllithium. Ils peuvent être préparés par polymérisation successive de styrène et de diène lorsque les copolymères blocs linéaires sont en cause. Lorsque l'on se réfère aux copolymères blocs de structure radiale, il s'agit de copolymères pouvant comporter au moins trois branches, chacune des branches comprenant un bloc polystyrène et un bloc polydiène. Ce procédé est parfaitement décrit notamment dans le brevet US 3281383. Il est entendu que les copolymères décrits ci-dessus peuvent comporter des parties statistiques sans pour autant sortir du cadre de la présente invention.

On peut utiliser de nombreuses huiles de mise en oeuvre dans la composition de la présente invention. De préférence on utilisera une huile de mise en oeuvre dont la répartition par type de carbone est la suivante :
- de 0 à 25% de carbone aromatique
- de 20 à 50% de carbone naphténique
- de 40 à 80% de carbone paraffinique.

Les compositions bitumineuses de la présente invention peuvent également contenir une ou plusieurs résines tackifiantes à raison de 0 à 25% en poids de la composition bitumineuse sans charges minérales. Les résines tackifiantes sont bien connues dans l'état de la technique et sont notamment décrites dans le brevet US 4738884. Le rôle des résines tackifiantes est bien connu de l'homme de l'art.

Conformément à la présente invention, la fabrication de la composition bitumineuse peut se faire de manière particulièrement aisée, par exemple dans des mélangeurs de type Banbury ou dans des extrudeuses. Cette fabrication est en effet permise grâce à l'utilisation de bitume oxydé dont la manipulation est très facile comme indiqué ci-dessus.
Il suffit d'introduire dans le mélangeur successivement ou simultanément le bitume oxydé, les copolymères blocs styrènes-diènes conjugués, la charge minérale et les huiles de mise en oeuvre.

A partir des compositions bitumineuses de la présente invention, on peut très facilement fabriquer des matériaux d'insonorisation; par exemple des feuilles insonorisantes peuvent être fabriquées par calandrage ou par extrusion.

Ces matériaux d'insonorisation peuvent par exemple être utilisés dans l'industrie automobile, en construction ainsi que dans le secteur électroménager.

En particulier, les matériaux de la présente invention sont utilisés en industrie automobile afin d'insonoriser les véhicules tels les voitures, les camionnettes, les camions et autres.

La présente invention est maintenant décrite à l'aide des exemples ci-après qui sont donnés à titre d'illustration et qui ne constituent en aucun cas une limitation.

### Exemples

Dans un mélangeur de type Banbury, préchauffé à 80°C (température inférieure à la température de ramolissement du bitume), on introduit les composants et on malaxe pendant 15 minutes. Ensuite, la composition est homogénéisée sur un roll mill puis extrudée à travers une filière plate.

Des plaques de 3mm avec une densité d'environ 2200 kg/m³ ont ainsi été produites. Les plaques résistent bien à la pliure et peuvent être thermoformées. En outre, leur teneur en matières volatiles est très basse surtout dans le cas de la composition 1, qui ne contient pas d'huile.

### Composition 1

- 75%: carbonate de calcium
- 12%: copolymère radial styrène-butadiène
masse moléculaire 135.000
teneur en styrène 30%
- 13%: bitume oxydé avec température de bille et anneau (ASTM D 36-66) de 110°C et pénétration à 25°C (ASTM D 5-65) de 3 (mm)

### Composition 2 Comparative

- 75%: carbonate de calcium
- 12%: copolymère styrène-butadiène dibloc
masse moléculaire 75.000
teneur en styrène 25%
- 3%: huile de mise en oeuvre dont la répartition par type de
carbone est : 7% carbone aromatique
28% carbone naphténique
65% carbone paraffinique
- 10%: bitume oxydé avec température de bille et anneau (ASTM D 36-66) de 110°C et pénétration à 25°C (ASTM D 5-65) de 3 (mm)

## Revendications

1. Matériau d'insonorisation à base d'une composition bitumineuse qui consiste essentiellement en un mélange consistant en :
- 40 à 70% en poids de bitume oxydé,
- 30 à 60% en poids de copolymères blocs styrènes-diènes conjugués,
- 0 à 10% en poids d'huile de mise en oeuvre,
le total représentant 100% en poids du mélange et une charge minérale représentant 50 à 85% en poids de la composition, **caractérisé en ce qu'**on utilise des copolymères blocs styrène-butadiène-styrène à structure radiale dont la teneur en styrène est comprise entre 20 et 35% en poids.

2. Utilisation d'un matériau insonorisant selon la revendication 1 en industrie automobile pour l'insonorisation des véhicules.

## Claims

1. Soundproofing material based on a bituminous composition which consists substantially of a mixture consisting of:
- 40 to 70% by weight of oxidised bitumen;
- 30 to 60% by weight of conjugated styrene-diene block copolymers;
- 0 to 10% by weight of usage oil,
the total representing 100% by weight of the mixture and a mineral filler representing 50 to 85% by weight of the composition, **characterised in that** styrene-butadiene-styrene block copolymers with a radial structure are used, the styrene content of which is between 20 and 35% by weight.

2. Use of a sound-proofing material according to claim 1 in the car industry, for soundproofing of vehicles.

## Patentansprüche

1. Material zur Schalldämpfung, basierend auf einer bituminösen Zusammensetzung, welche im Wesentlichen aus einem Gemisch aus:
- 40 bis 70 Gew.-% oxidiertes Bitumen,
- 30 bis 60 Gew.-% konjugierte Styrol-Dien Blockcopolymere,
- 0 bis 10 Gew.-% Prozessöl,
besteht, wobei die Gesamtmenge des Gemisches 100 Gew.-% ausmacht und ein mineralischer Füllstoff 50 bis 85 Gew.-% der Zusammensetzung ausmacht,
**dadurch gekennzeichnet, dass** der Styrolanteil des verwendeten Styrol-Butadien-Styrol Blockcopolymeres mit Radialstruktur 20 bis 35 Gew.-% ausmacht.

2. Verwendung eines Materials zur Schalldämpfung nach Anspruch 1 in der Automobilindustrie zur Schalldämpfung von Fahrzeugen.
